# EUROPÄISCHE PATENTSCHRIFT

(11) **EP 2 124 639 B1**
(45) Veröffentlichungstag und Bekanntmachung des Hinweises auf die Patenterteilung: **22.08.2018**
(21) Anmeldenummer: 08700880.1
(22) Anmeldetag: 22.01.2008
(51) Int. Cl.: A23J 3/14, A23L 11/00, A23L 33/17

(54) **VERFAHREN ZUR VERÄNDERUNG DES AROMAPROFILS EINES PFLANZLICHEN PROTEINPRÄPARATS**
METHOD FOR MODIFYING THE FLAVOR PROFILE OF A PLANT PROTEIN PREPARATION
PROCÉDÉ DE MODIFICATION DU PROFIL AROMATIQUE D'UNE PRÉPARATION PROTÉIQUE VÉGÉTALE

(30) Priorität: 23.01.2007 DE 102007003262
(43) Veröffentlichungstag der Anmeldung: 02.12.2009
(73) Patentinhaber: Prolupin GmbH, 18507 Grimmen (DE)
(72) Erfinder: MÜLLER, Klaus, 85356 Freising (DE); EISNER, Peter, 85354 Freising (DE); SCHOTT, Michael, 85416 Langenbach (DE); BEZ, Jürgen, 80687 München (DE); BADER, Stefanie, 85354 Freising (DE); HASENKOPF, Katrin, 85354 Freising (DE); FRANKL, Michael, 81241 München (DE)
(74) Vertreter: Witte, Weller & Partner Patentanwälte mbB
(86) Internationale Anmeldenummer: PCT/DE2008/000111
(87) Internationale Veröffentlichungsnummer: WO 2008/089734

(56) Entgegenhaltungen:
- WO-A-2004/034806
- WO-A-2005/104870
- DE-A1- 19 523 154
- US-A1- 2006 099 301
- YOSHIE-STARK ET AL: "Functional and bioactive properties of rapeseed protein concentrates and sensory analysis of food application with rapeseed protein concentrates" LEBENSMITTEL WISSENSCHAFT UND TECHNOLOGIE, ACADEMIC PRESS, LONDON, GB, Bd. 39, Nr. 5, Juni 2006 (2006-06), Seiten 503-512, XP005300548 ISSN: 0023-6438
- SOLINA M ET AL: "Volatile aroma components of soy protein isolate and acid-hydrolysed vegetable protein" FOOD CHEMISTRY, ELSEVIER SCIENCE PUBLISHERS LTD, GB, Bd. 90, Nr. 4, Mai 2005 (2005-05), Seiten 861-873, XP004615603 ISSN: 0308-8146
- MAKRI E ET AL: "Study of functional properties of seed storage proteins from indigenous European legume crops (lupin, pea, broad bean) in admixture with polysaccharides" FOOD HYDROCOLLOIDS, ELSEVIER, Bd. 19, Nr. 3, Mai 2005 (2005-05), Seiten 583-594, XP004719686 ISSN: 0268-005X
- MOURE ET AL: "Functionality of oilseed protein products: A review" FOOD RESEARCH INTERNATIONAL, ELSEVIER APPLIED SCIENCE, BARKING, GB, Bd. 39, Nr. 9, November 2006 (2006-11), Seiten 945-963, XP005658096 ISSN: 0963-9969
- DOXASTAKIS ET AL: "Technological properties and non-enzymatic browning of white lupin protein enriched spaghetti" FOOD CHEMISTRY, ELSEVIER SCIENCE PUBLISHERS LTD, GB, Bd. 101, Nr. 1, 12. August 2006 (2006-08-12), Seiten 57-64, XP005754147 ISSN: 0308-8146

## Beschreibung

### Anwendungsgebiet

Die Erfindung betrifft ein Verfahren zur Veränderung des Aromaprofils eines pflanzlichen Proteinpräparats, insbesondere eines Proteinpräparats aus Leguminosen, sowie ein mit dem Verfahren erhaltenes pflanzliches Proteinpräparat, das sich in Lebensmitteln einsetzen lässt.

### Stand der Technik

Die Verwendung von pflanzlichen Proteinen in Lebensmitteln anstelle von tierischen Rohstoffen wie Ei oder Milch gewinnt zunehmend an Bedeutung. Pflanzenproteine zeigen bei einer Vielzahl von Lebensmittelanwendungen sehr gute techno-funktionelle Eigenschaften. Proteinpräparate aus Rohstoffen wie Soja, Reis, Lupine oder anderen proteinhaltigen Pflanzensaaten kommen in Lebensmitteln zum Beispiel als Wasserbinder, Ölbinder, Gelbildner, Emulgator oder Schaumbildner zum Einsatz.

Verfahren zur Isolierung von Proteinen aus der Lupine sind aus der DE 195 23 154 und der US 2006/0099301 bekannt.

Alle bekannten pflanzlichen Proteinprodukte aus Leguminosen wie Soja, Erbse oder Lupinen zeigen ein Leguminosen-typisches Aromaprofil. Dieses wird von Testpersonen bei sensorischen Verkostungen als grasig, bohnig, erbsig oder grün beschrieben und ist für die meisten Lebensmittel-Anwendungen unerwünscht.

Es gibt verschiedene Versuche, dieses Aroma zu maskieren oder störende Aromakomponenten abzutrennen. Beispiele sind die Behandlung von Proteinlösungen durch Milchsäurefermentation oder die Adsorption von Aromen an Ionentauschern. Die Zugabe maskierender Aromen und sehr bitter oder intensiv schmeckender Aromen wie beispielsweise Grapefruit oder
Maracuja kommen ebenfalls zum Einsatz. Die Verfahren und Aromen sind sehr teuer und erzeugen keine neutral schmeckenden Proteinpräparate. Die Proteinpräparate sind damit nicht universell einsetzbar und man ist bei der Aromaauswahl sehr stark eingeschränkt. Damit sind die genannten Verfahren für die Herstellung von Leguminosenproteinpräparaten mit einem neutralen Aromaprofil nicht geeignet.

Unter einem Aromaprofil wird hierbei der geruchliche und geschmackliche Eindruck verstanden, der beim Riechen und Verzehren der Proteinpräparate entsteht. Je nach Herkunft der Proteinpräparate ist ein saatentypischer Geruchs- und Geschmackseindruck wahrnehmbar, der durch saateigene Inhaltsstoffe wie etwa phenolische Verbindungen oder durch chemisch, physikalisch oder enzymatisch bedingte Veränderungen von Saatinhaltsstoffen entsteht. Je nach Konzentration der aromaintensiven Inhaltsstoffe und je nach Intensität der Veränderungsreaktionen ist somit das saatentypische Aromaprofil mehr oder weniger stark wahrnehmbar. Ein neutrales Aromaprofil zeichnet sich dadurch aus, dass die geruchs- und geschmackserzeugenden originären Komponenten der Proteinpräparate nicht mehr signifikant wahrnehmbar sind.

Die Aufgabe der vorliegenden Erfindung besteht darin, ein Verfahren zur Veränderung des Aromaprofils eines pflanzlichen Proteinpräparats für den Einsatz in Lebensmitteln anzugeben, mit dem sich das Aromaprofil so verändern lässt, dass es eine verringerte Intensität an für Lebensmittel unerwünschten Aromen aufweist. Das Verfahren soll auch die Bereitstellung eines Proteinpräparats aus Leguminosen ermöglichen, das ein möglichst neutrales Aromaprofil ohne die für Leguminosen typischen Aromen aufweist.

### Darstellung der Erfindung

Die Aufgabe wird mit dem Verfahren mach Anspruch 1 gelöst. Vorteilhafte Ausgestaltungen des Verfahrens sind Gegenstand der Unteransprüche oder lassen sich der nachfolgenden Beschreibung entnehmen.

Beim erfindungsgemäßen Verfahren wird das pflanzliche Proteinpräparat, insbesondere ein Leguminosenprotein für einen Zeitraum von ≥1 Minute, in wässriger Lösung mit löslichen Kohlenhydraten in Kontakt gebracht, die eine Temperatur zwischen 40°C und 70°C und einen pH-Wert zwischen 3,5 und 5 aufweist, um die gewünschte Veränderung des Aromaprofis zu bewirken. Im Falle von Leguminosenproteinen zeigt das Verfahren bei Lupinenproteinen eine besonders ausgeprägte Wirkung. Das Aromaprofil von Lupinenproteinen kann durch das erfindungsgemäße Verfahren fast vollständig neutralisiert werden.

Besonders vorteilhaft kommen als Kohlenhydrate Glucose, Fructose oder Xylose oder Mischungen der genannten Stoffe zum Einsatz. Es ist selbstverständlich auch möglich, andere lösliche Kohlenhydrate zu verwenden. Der Gehalt an Kohlenhydraten oder Zucker in der Lösung liegt beim erfindungsgemäßen Verfahren vorzugsweise zwischen 0,1 und 20 Gew.-%. Besonders wirtschaftlich gestaltet sich das Verfahren bei einem Zuckergehalt zwischen 1 und 5 Gew.-%.

Der Vorgang der Aromaveränderung wird durch die Erhöhung der Temperatur auf Werte zwischen 40 °C und 70 °C beschleunigt. Bei Erhöhung der Temperatur und Verweilzeit verschiebt sich das Leguminosenaroma in Richtung Milcharoma (40 °C - 55 °C), zu Milchkochgeschmack, um bei weiterer Steigerung der Temperatur über 60 °C und langer Zeit-Belastung (> 30 Minuten) ins nussige und karamelartige überzugehen. Somit können durch Auswahl von Temperatur und Zeit unterschiedliche Aromen eingestellt werden. Besonders ansprechende und neutrale Profile werden im Temperaturbereich zwischen 50 und 60 °C bei Verweilzeiten zwischen 1 und 30 Minuten erhalten. Auch längere Verweilzeiten bis zu 2 Stunden sind möglich.

Der Aroma verändernde Effekt des erfindungsgemäßen Verfahrens erfolgt bei pH-Werten zwischen 3,5 und 5,5 bei sonst gleichen Bedingungen verstärkt. Mit diesen Werten wird auch ein besonders neutrales Aroma bei Leguminosenproteinen, insbesondere bei Lupinenprotein, erreicht. Die Einstellung des pH-Wertes kann durch Zugabe von anorganischen Säuren wie etwa einer Mineralsäure, z.B. Salzsäure, aber auch durch Zugabe von organischen Säuren erfolgen wie etwa Zitronensäure.

Mit dem vorgeschlagenen Verfahren ist es neben einer Abschwächung oder Neutralisierung des gesamten Aromaprofils oder einzelner Aromakomponenten dieses Profils auch möglich, durch eine verkürzte Verweilzeit ein schmales, scharfes und markantes Aromaprofil einzustellen. Die Anzahl an unterschiedlichen Aromakomponenten wird im Sauren durch die Reduktion der Kontaktzeit reduziert, das Produkt schmeckt intensiver. Durch Erhöhung des pH-Wertes wird die Geschwindigkeit der Aromaveränderung verlangsamt und abgeflacht, die Anzahl an unterschiedlichen Aromen wird erhöht und die Geschmacksbreite ausgedehnt. Diese Effekte können für unterschiedliche Anforderungen an die Zutat sehr sinnvoll kombiniert werden.

Bei der praktischen Umsetzung des erfindungsgemäßen Verfahrens wird vorzugsweise zunächst eine wässrige Proteinlösung oder eine homogene Proteinsuspension bereitgestellt. Hierfür wird Wasser mit einem bspw. Leguminosenprotein enthaltenden Feststoff vermischt. Der Feststoff kann ein handelsübliches pflanzliches Proteinpräparat sein oder zerkleinerte Leguminosensamen oder geschälte und nachfolgend zerkleinerte bzw. flockierte Leguminosensamen oder proteinhaltige Fraktionen aus den Samen, die zuvor abgetrennt wurden.

Der Proteingehalt in der Lösung wird beim erfindungsgemäßen Verfahren vorzugsweise auf einen Wert zwischen 0,1 und 20 Gew.-% eingestellt. Besonders vorteilhaft ist der Bereich zwischen 1 bis 5 Gew.-%.

Es ist für die weitere Veränderung des Aromaprofils von Vorteil, für das Verfahren proteinhaltige Fraktionen aus Legumninosensamen einzusetzen, die vorher einer wässrigextraktiven Behandlung unterzogen wurden. Damit wird der Anteil an unerwünschten Aromen im proteinhaltigen Rohstoff vor der Durchführung des erfindungsgemäßen Verfahrens bereits reduziert. Für die Ausgestaltung einer derartigen Vorbehandlung durch eine saure Vorextraktion werden zerkleinerte oder flockierte Leguminosensamen einmal oder mehrfach mit Wasser vermischt, und nachfolgend der Feststoff von der Flüssigkeit abgetrennt. Bei dieser Vorextraktion weist das Wasser einen pH-Wert kleiner 6, besonders vorteilhaft kleiner 5 auf. Auf diese Weise wird eine Reihe von in saurem Wasser löslichen Leguminosenaromen aus den zerkleinerten Samen herausgelöst und abgetrennt.

Das erfindungsgemäße Verfahren führt zu einem Leguminosenprotein, das ein deutlich verändertes Aromaprofil aufweist und die charakteristischen Aromen der Leguminosen kaum noch enthält. Als solches bietet es sich als Zutat für eine Reihe von aromasensiblen Lebensmitteln an. Beispiele für derartige Lebensmittel sind Emulsionen wie Süßspeisen, Desserts, Speiseeis, Mayonnaisen, Füllungen von Schokolade oder Backwaren. Auch ein Einsatz für andere funktionelle, texturgebende Aufgaben wie Wasser- oder Fettbindung, Schaumbildung und Gelbildung in Wurstwaren, Teigwaren, Backwaren oder feinen Backwaren ist möglich.

Zur einfachen Beimischung in die Lebensmittelrezeptur bei der Herstellung der Lebensmittel kann es von Vorteil sein, das Protein aus dem Prozess noch im Wasser gelöst bzw. dispergiert direkt oder nach vorheriger Erhitzung oder nach einem Tiefgefrieren und Auftauen ähnlich wie Flüssigei zu verarbeiten. Eine aufwändige Fraktionierung entfällt. Allerdings gelangen dann neben dem Leguminosenprotein auch die Kohlenhydrate aus dem erfindungsgemäßen Verfahren in das Lebensmittel. Bei Einsatz süß schmeckender Kohlenhydrate wird dann der Geschmack des Lebensmittels beeinflusst, was bei Wurstwaren oder Teigwaren stören kann.

Deshalb ist es von Vorteil, nach der Behandlung des Proteins mit dem erfindungsgemäßen Verfahren das Protein in möglichst reiner Form zu gewinnen. Hierfür kann das Protein ausgefällt und mechanisch abgetrennt werden. Er ist auch möglich die Kohlenhydrate in wässriger Lösung vom Protein durch Membranverfahren wie z.B. Ultrafiltration abzutrennen. Damit ist auch beim Einsatz des noch wasserhaltigen Proteins eine Beeinflussung des Lebensmittels durch einen süßen Geschmack ausgeschlossen.

Es ist auch möglich, das Protein zu einem trocknen Präparat zu verarbeiten. Hierfür kann es zusammen mit den Kohlenhydraten oder nach Abtrennung der Kohlenhydrate getrocknet werden. Dies erhöht die mikrobiologische Sicherheit bei der Lagerung.

Neben Proteinen aus Leguminosen kann das erfindungsgemäße Verfahren auch für andere Pflanzenproteine zum Einsatz kommen. Beispiele sind Proteine aus Ölsaaten wie Raps, Sonnenblume oder Leinsaat. Die Ölsaatenproteine weisen ähnlich wie Leguminosen typische Aromaprofile auf, die mit Hilfe des erfindungsgemäßen Verfahrens verändert, insbesondere abgeschwächt, werden können.

Eingesetzt wird das Produkt vorzugsweise als Ersatz für Milchprotein oder Eiprotein in Lebensmitteln. Durch die ähnliche Konsistenz wie flüssiges Eigelb oder flüssiges Vollei können diese Lebensmittelzutaten besonders gut durch das mit dem erfindungsgemäßen Verfahren bearbeitete Produkt ersetzt werden. Der Zuckergehalt ist für die meisten Anwendungen tolerabel, kann allerdings in wenigen Anwendungen als störend empfunden werden.

Das nach Durchführung des erfindungsgemäßen Verfahrens erhaltene Produkt bietet sich deshalb besonders für gesüßte Lebensmittel-Emulsionen an wie Süßspeisen, Desserts, gesüßte Mayonnaisen, Füllungen von Schokolade oder Backwaren. Auch ein Einsatz in Wurstwaren, Backwaren oder feinen Backwaren ist möglich, wenn der Zuckergehalt nicht stört.

Neben Proteinen aus Lupine kann das erhaltene Produkt auch Proteine aus anderen Proteinpflanzen enthalten. Beispiele sind Raps, Sonnenblume, Leinsaat und andere Ölsaaten sowie Leguminosen wie Soja, Erbse, Ackerbohne oder andere.

Im Folgenden wird ein Beispiel für eine vorteilhafte Veränderung des Aromaprofils eines Lupinenproteinpräparats mit dem vorgeschlagenen Verfahren nochmals kurz erläutert. Zunächst wird eine 15 %ige Lösung des Lupinenproteinisolates hergestellt. Der pH-Wert der Proteinlösung wird mit Salzsäure auf pH 4 eingestellt. Der saueren Proteinlösung wird Xylose zugesetzt, so dass die Xylose-Konzentration in der Lösung 5 % beträgt. Unter ständigem Rühren wird die zuckerhaltige Proteinlösung auf 60 °C erhitzt und bei dieser Temperatur 15 Minuten gehalten. Nach der Heißhaltephase wird der Ansatz mit Natronlauge neutralisiert und auf einen pH-Wert von 6,8 eingestellt. Das erfindungsgemäß veränderte Proteinprodukt wird im Anschluss an diese Behandlung sprühgetrocknet und kann dann für die Herstellung von Lebensmitteln verwendet werden.

## Patentansprüche

1. Verfahren zur Veränderung des Aromaprofils eines pflanzlichen Proteinpräparats, insbesondere eines Proteinpräparats aus Leguminosen,
bei dem das Proteinpräparat vor einer Zugabe zu einem Lebensmittelprodukt für einen Zeitraum von ≥ 1 Minute in einer wässrigen Lösung mit wasserlöslichen Kohlenhydraten in Kontakt gebracht wird, die eine Temperatur zwischen 40 °C und 70 °C aufweist, wobei ein pH-Wert in der wässrigen Lösung eingestellt wird, der zwischen 3,5 und 5 liegt.

2. Verfahren nach Anspruch 1,
bei dem bei dem das Proteinpräparat für einen Zeitraum zwischen 1 und 30 Minuten bei einer Temperatur der wässrigen Lösung mit den Kohlenhydraten in Kontakt gebracht wird, die zwischen 50 und 60 °C liegt.

3. Verfahren nach Anspruch 1,
bei dem das Proteinpräparat für einen Zeitraum von > 30 Minuten bei einer Temperatur der wässrigen Lösung mit den Kohlenhydraten in Kontakt gebracht wird, die über 60 °C liegt.

4. Verfahren nach einem der Ansprüche 1 bis 3,
bei dem ein Gehalt an den Kohlenhydraten in der wässrigen Lösung eingestellt wird, der zwischen 0,1 und 20 Gew.-% liegt.

5. Verfahren nach Anspruch 4,
bei dem ein Gehalt an den Kohlenhydraten in der wässrigen Lösung eingestellt wird, der zwischen 1 und 5 Gew.-% liegt.

6. Verfahren nach Anspruch 1,
bei dem der Proteingehalt in der wässrigen Lösung auf einen Wert zwischen 0,1 und 20 Gew.-% eingestellt wird.

7. Verfahren nach Anspruch 6,
bei dem der Proteingehalt in der wässrigen Lösung auf einen Wert zwischen 1 und 5 Gew.-% eingestellt wird.

8. Verfahren nach einem der Ansprüche 1 bis 7,
bei dem das Proteinpräparat aus proteinhaltigen Fraktionen aus Leguminosensamen erhalten wird, die zunächst einer wässrig-extraktiven Vorbehandlung unterzogen werden, um einen Anteil an unerwünschten Aromen zu verringern.

9. Verfahren nach Anspruch 8,
bei dem die wässrig-extraktive Vorbehandlung eine saure Vorextraktion umfasst, bei der zerkleinerte oder flockierte Leguminosensamen einmal oder mehrfach mit Wasser vermischt werden, das einen pH-Wert kleiner 6, besonders vorteilhaft kleiner 5, aufweist.

10. Verfahren nach einem der Ansprüche 1 bis 9
zur Abschwächung des Aromas eines pflanzlichen proteinpräparats aus Lupinen.

11. Pflanzliches Proteinpräparat, insbesondere aus Leguminosen, das ein mit dem Verfahren gemäß einem der vorangehenden Patentansprüche verändertes Aromaprofil aufweist.

12. Pflanzliches Proteinpräparat nach Anspruch 11 in wässriger Lösung mit Kohlenhydraten.

13. Pflanzliches Proteinpräparat nach Anspruch 11 in getrockneter Form mit oder ohne Kohlenhydrate.

## Claims

1. Method for modifying the flavor profile of a plant protein preparation, in particular a protein preparation from legumes,
wherein before the addition to a food product the protein preparation is brought into contact for a time period of ≥ 1 minute with water soluable carbohydrates in an aqueous solution, which comprises a temperature of 40 °C to 70 °C, wherein a pH value of 3.5 to 5 is adjusted in the aqueous solution.

2. Method of claim 1,
wherein the protein preparation is brought into contact with the carbohydrates for a time period of 1 and 30 minutes at a temperature of the aqueous solution of 50 to 60 °C.

3. Method of claim 1,
wherein the protein preparation is brought into contact with the carbohydrates for a time period of > 30 minutes at a temperature of the aqueous solution of above 60 °C.

4. Method of any of claims 1 to 3,
wherein a content of carbohydrates in the aqueous solution is adjusted to 0.1 to 20 wt.-%.

5. Method of claim 4,
wherein a content of carbohydrates is adjusted in the aqueous solution to 1 to 5 wt.-%.

6. Method of claim 1,
wherein the protein content in the aqueous solution is adjusted to a value of 0.1 to 20 wt.-%.

7. Method of claim 6,
wherein the protein content in the aqueous solution is adjusted to a value of 1 to 5 wt.-%.

8. Method of any of claims 1 to 7,
wherein the protein preparation is obtained from protein-containing fractions from legume seeds which are initially subjected to an aqueous extractive pretreatment to reduce a part of unwanted flavors.

9. Method of claim 8,
wherein the aqueous extractive pretreatment comprises an acidic preextraction where minced or flaked legume seeds are mixed for one time or several times with water, which comprises a pH value of less than 6, particularly advantageous of less than 5.

10. Method of any of claims 1 to 9,
to attenuate the flavor of a plant protein preparation from legumes.

11. Plant protein preparation, in particular from legumes, comprising a flavor profile modified by a method according to any of the previous claims.

12. Plant protein preparation of claim 11 in aqueous solution with carbohydrates.

13. Plant protein preparation of claim 11 in dried form with or without carbohydrates.

## Revendications

1. Procédé servant à modifier le profil aromatique d'une préparation protéique végétale, en particulier d'une préparation protéique composée de légumineuses,
où la préparation protéique est amenée en contact avec des glucides hydrosolubles pendant une durée ≥ 1 minute dans une solution aqueuse, qui présente une température comprise entre 40 °C et 70 °C, avant un ajout à un produit alimentaire, dans lequel est réglée dans la solution aqueuse une valeur pH, qui se situe entre 3,5 et 5.

2. Procédé selon la revendication 1,
où la préparation protéique est amenée en contact avec les glucides pendant une durée comprise entre 1 et 30 minutes à une température de la solution aqueuse, qui se situe entre 50 et 60 °C.

3. Procédé selon la revendication 1,
où la préparation protéique est amenée en contact avec les glucides pendant une durée > 30 minutes à une température de la solution aqueuse, qui est supérieure à 60 °C.

4. Procédé selon l'une quelconque des revendications 1 à 3,
où, dans la solution aqueuse, une teneur en glucides qui se situe entre 0,1 et 20 % en poids est réglée.

5. Procédé selon la revendication 4,
où, dans la solution aqueuse, une teneur en glucides qui se situe entre 1 et 5 % en poids est réglée.

6. Procédé selon la revendication 1,
où la teneur en protéines dans la solution aqueuse est réglée sur une valeur comprise entre 0,1 et 20 % en poids.

7. Procédé selon la revendication 6,
où la teneur en protéines dans la solution aqueuse est réglée sur une valeur comprise entre 1 et 5 % en poids.

8. Procédé selon l'une quelconque des revendications 1 à 7,
où la préparation protéique est obtenue à partir de fractions contenant des protéines composées de graines de légumineuses, qui sont soumises dans un premier temps à un prétraitement par extraction en phase aqueuse pour réduire une partie d'arômes non souhaités.

9. Procédé selon la revendication 8,
où le prétraitement par extraction en phase aqueuse comprend une préextraction acide, dans laquelle des graines de légumineuses fragmentées ou transformées en flocons sont mélangées une fois ou plusieurs fois à de l'eau, qui présente une valeur pH inférieure à 6, de manière particulièrement avantageuse inférieure à 5.

10. Procédé selon l'une quelconque des revendications 1 à 9,
servant à atténuer l'arôme d'une préparation protéique végétale composée de lupins.

11. Préparation protéique végétale, en particulier composée de légumineuses, qui présente un profil aromatique modifié avec le procédé selon l'une quelconque des revendications précédentes.

12. Préparation protéique végétale selon la revendication 11 dans une solution aqueuse avec des glucides.

13. Préparation protéique végétale selon la revendication 11 sous une forme séchée avec ou sans glucides.
